# EUROPEAN PATENT SPECIFICATION

(11) **EP 2 020 143 B1**
(45) Date of publication and mention of the grant of the patent: **23.07.2014**
(21) Application number: 07750974.3
(22) Date of filing: 13.02.2007
(51) Int. Cl.: H04W 16/28

(54) **DYNAMIC CELL CONTROL THROUGH ANTENNA RADIATION PATTERN SYNTHESIS**
DYNAMISCHE ZELLENKONTROLLE MITTELS ANTENNENSTRAHLUNGSMUSTERSYNTHESE
CONTRÔLE DE CELLULE DYNAMIQUE PAR SYNTHÈSE DE MODÈLE DE RAYONNEMENT D'ANTENNE

(30) Priority: 24.05.2006 US 808318 P; 12.02.2007 US 705239
(43) Date of publication of application: 04.02.2009
(73) Proprietor: Cisco Technology, Inc., San Jose, CA 95134 (US)
(72) Inventor: JIN, Hang, Plano, TX 75025 (US); GRABNER, John, Plano, TX 75025 (US)
(74) Representative: Kazi, Ilya
(86) International application number: PCT/US2007/004177
(87) International publication number: WO 2007/139600

(56) References cited:
- EP-A1- 1 184 938
- WO-A1-02/43278
- WO-A1-99/60659
- WO-A2-01/24385
- GB-A- 2 361 385
- US-A1- 2004 166 902
- US-A1- 2004 259 558

## Description

### BACKGROUND

The present invention relates generally to wireless communication systems, and more particularly to dynamic cell control.

Cell control, i.e., cell blossoming, cell wilting or cell breathing, is a process with which the cell coverage is deliberately tweaked during operations. Cell control is one of the key network optimization processes aiming to improve network performances. For example, a cell wilting is a network gradually reduces a cell's coverage to take it out of service for maintenance without causing dropped calls. Cell blossom is adding a new cell into the network by gradually increasing its coverage without overloading active terminals. Cell breathing is used to dynamically shuffle users among cells to help better balance traffics among the cells.

A conventional cell control method employs forward power control. For example, given a total power allocated for a round of traffic, the coverage radian can be estimated based on a path loss, which, in turn, is mainly determined by following factors: base transceiver station (BTS) height, carrier frequency, morphology of the coverage area, and terminal heights. If the coverage needs be reduced (cell wilting or breathe), the network may reduce the power allocated for the traffic. The amount of power reduction can be estimated from the relationship of transmitter power vs. coverage radian. The transmitter power vs. coverage radian relationship can be established theoretically or experimentally. The cell control via forward power control needs be carried out synchronically among multiple cells in a cluster to avoid leaving coverage holes in the coverage area. This makes the network system design complicated.

Therefore, what is desired is simple cell control method that can be carried out dynamically and in real time.

WO 01/24385 discloses a method for wireless communications wherein a base station transmits a signal to a subscriber station through a signal beam that sweeps through the coverage area of the base station. The base station may alter the beam sweep speed or the shape of the beam's radiation pattern over time to maximize system efficiency and capacity.

WO 99/60659 discloses controlling a radiation pattern dynamically based on the number of users serviced by the sectors of a multi-sector base station.

### SUMMARY

Aspects of the invention are set out in the independent claims. Certain preferred features are set out in the dependent claims.

The construction and method of operation of the invention, however, together with additional objects and advantages thereof will be best understood from the following description of specific embodiments when read in connection with the accompanying drawings.

### BRIEF DESCRIPTION OF THE DRAWINGS

The present invention is illustrated by way of example, and not by way of limitation, in the figures of the accompanying drawings in which like reference numerals refer to similar elements.
FIG.1 illustrates conventional cells with omni-directional coverage area in a wireless network.
FIG. 2A and 2B illustrate cells with antenna radiation pattern synthesis in a wireless network according to an embodiment of the present invention.
FIG. 3 is a flow chart illustrating steps taken to synthesize antenna radiation patterns according to the embodiment of the present invention.

### DESCRIPTION

The following will provide a detailed description of a cell control method that controls cells' coverage though real-time antenna radiation pattern synthesis, which allows for two-dimensional cell coverage control and improves system performances. This method can be used alone or combined with the conventional cell control method of varying BTS transmitter power.

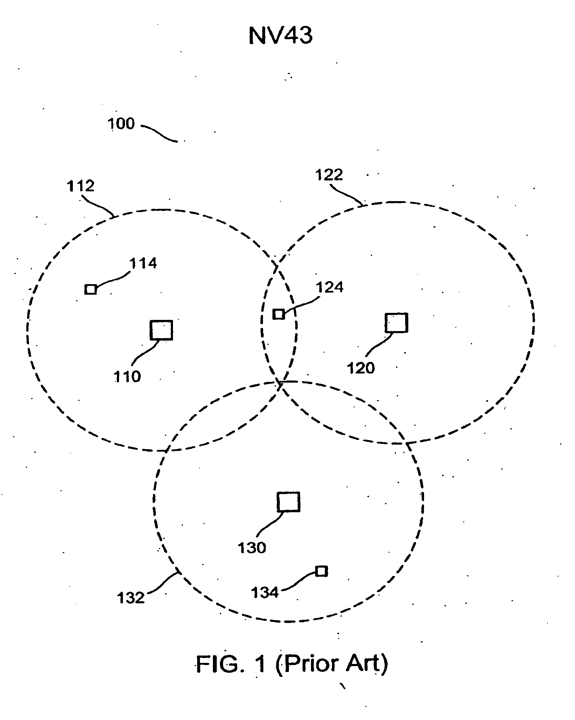

FIG. 1 illustrates conventional cells with omni-directional coverage area in a wireless network 100. Base transceiver stations (BTSs) 110,120 and 130 cover omni-directional areas 112,122 and 132, respectively. Terminals 114 and 134 are in the omni-directional areas 112 and 132, respectively, and therefore served by the BTSs 110 and 130, respectively. A terminal 124 is in an overlapping area of the omni-directional areas 112 and 122, and therefore can be served by both BTSs 110 and 120. For the wireless network 100 with conventional omni-directional cells, cell control may be achieved through varying forward transmission power. But the shape of the coverage areas 112,122 and 132 are always circular. Varying forward transmission power results only in diameter changes of the circular coverage areas 112,122 and 132. When neighboring cells require different coverage areas, diameter change is apparently less efficient to have all the areas covered.

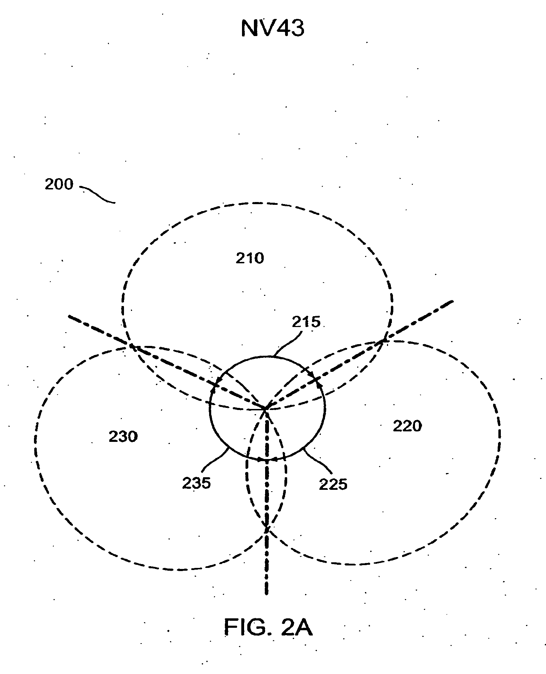

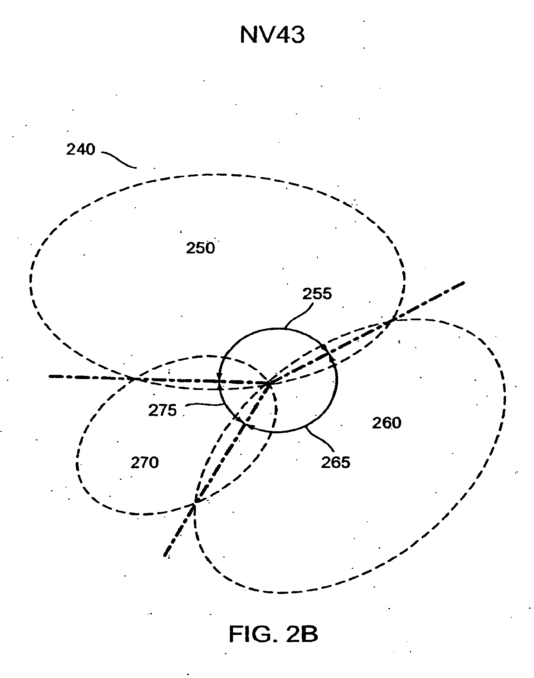

FIG. 2A and 2B illustrate cells with antenna radiation pattern synthesis in a wireless network 200 according to an embodiment of the present invention. Referring to FIG. 2A, cell coverage areas 210, 220 and 230 are provided by corresponding BTSs (not shown), respectively, through antenna radiation pattern synthesis. Angle spans 215, 225 and 235 represent the radiation pattern spanning of the coverage areas 210, 220 and 230, respectively. Assuming each coverage area 210, 220 or 230 has approximately equal amount of traffic loads, then the radiation patterns span an equal 120° in an azimuth plane, i.e., the three coverage areas 210,220 and 230 are approximately equal in shape and size.

Referring to FIG. 2B, coverage areas 250, 260 and 270 in a wireless network 240 are of different sizes. Angle spans 255, 265 and 275 represent radiation pattern spanning of the coverage areas 250, 260 and 270, respectively. Angle spans 255 and 265 are equally at 150°, and angle span 275 is at 60°. Therefore, the coverage area 330 is significantly smaller than the coverage areas 250 and 260. In this case, traffic density in coverage area 270 is higher than in other two coverage areas 250 and 260. That is when the coverage area 270 is overloaded with traffic while other two coverage areas 250 and 260 are underloaded; the angle span 275 of the overloaded coverage area 270 is reduced, while the angle spans 255 and 265 of the other coverage areas 250 and 260, respectively, are increased. As a result, some of the terminals that previously belong to the overloaded coverage area 270 are now being shuffled to the underloaded coverage areas 250 and 260. This will balance out the traffic loads among the three coverage areas 250, 260 and 270. Apparently adjusting the shapes and sizes of cell coverage areas through antenna radiation pattern synthesis is more efficient than adjusting diameters of circular cell coverage areas shown in FIG. 1.

Antenna radiation pattern synthesis is more achievable in a BTS with multiple antennas. For a BTS with an antenna array, traffics are received and sent through beamformings. For all uplink traffics (data sent from terminals to the BTS), the BTS antenna array will beamform them via either maximum ratio combining (MRC) or equal gain combining (EGC), or log likely-hood (LLC) combining or any other combining schemes. For downlink traffics, there are two types of beamformings. For traffic that is intended for a particular terminal, BTS will beamform the traffic to that particular terminal. However, for traffics that are intended for a group of terminals over a large coverage area, or the traffics are intended for a particular terminal but the terminal is not fixed and may be at any locations over a large coverage area (uncertainty of its spatial signature), BTS needs to send the traffic to a large designated coverage area. This can be achieved by synthesizing a radiation pattern that covers the desired area. For example, as shown in Fig. 1, if the desired coverage area is a circle with the BTS in the center, the synthesized BTS antenna radiation pattern for broadcast messages will be an omni-directional.

In order to synthesize a BTS's radiation pattern to a desired shape and size, parameters such as magnitudes and phases of the BTS's feed signals need to be set in such a way that the difference between the resulted (synthesized) pattern and a desired radiation pattern is minimized. For example, for a circular array with λ/2 spacing, where λ is a wave length of the signal, an omni-directional radiation pattern can be achieved by setting the same magnitude and phase for all feed signals. For a linear array with 8 elements and λ/2 spacing, a radiation pattern spanning 120° in the azimuth plane, as shown in FIG. 2A, can be achieved with the feed signals that have the same magnitude but different phases as follows:
Phase = [-312°, -208°, -52°, 0°, 0°, -52°, -208°, -312°].

For the same linear array, a radiation pattern spanning 40° in the azimuth plane, as shown in FIG. 2B, can be achieved with the feed signals that have the same magnitude and the following phases:
Phase = [135°, 100°, 30°, 0°, 0°, 30°, 100°, 135°].

Although synthesizing only two spanning angles through phase adjustments are disclosed here, one having skill in the art would have no difficulties to synthesizing other spanning angles through different phases adjustments as well as magnitude adjustments.

The antenna radiation pattern synthesis follows the general practice of optimization procedure, and all techniques used in optimization can be readily used here. A difference is that the optimization objective is the desired radiation pattern. In addition, some optimization constraints may also be added. For example, it may be required that all antennas have the same output power. This would make the feed signals for all antennas have the same magnitude. Another example of adding constraints is that the gain ripple of the synthesized pattern needs be less than certain threshold.

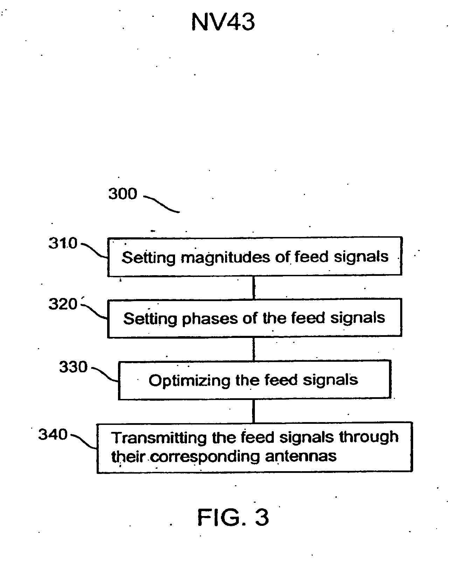

FIG. 3 is a flow chart 300 illustrating steps taken to synthesize antenna radiation patterns in more generic terms according to the embodiment of the present invention. In order to synthesize a desired antenna radiation pattern by a multi-antenna BTS, the BTS first sets magnitudes of feed signals based on prior knowledge in step 310. Then it is followed by phase setting on the feed signals also according to prior knowledge in step 320. These feed signals may be optimized, such as adding output power constraints, in step 330. Finally the adjusted feed signals are transmitted through their corresponding antennas in step 340. Note that the magnitudes and phases of the feed signals of each antenna element can be set in a baseband, radio frequency (RF) or a combination of the both.

The antenna radiation pattern synthesis method may be combined with the forward power control method to control cell coverage areas. Forward power allocation determines the coverage along radian while the antenna radiation pattern determines the coverage in the angular dimension. With the forward power control and antenna radiation synthesis, cell coverage area may be shaped the in two dimensions. This will considerably improve the cell control.

There are many applications of the dynamic cell control. Some of them are described below. A first application is traffic balances. The dynamic traffic control is used to better balance the traffics among cells. The cell control needs to be dynamic and in real time. The traffics are monitored for all cells, and if unbalanced traffics are detected, the over loaded cell will reduce its cell coverage along radian or angular or both, and the under loaded cells will increase its cell coverage along radian or angular or both. The coverage change along radian is done through power control, while the coverage change along angular is done through radiation pattern synthesis.

A second application is cell wilt. The cell control can be used to wilt cells out for the purpose of maintenance or repair.

A third application is cell blossom. The cell control can be used to add new cells into the network.

A fourth application is network planning. The antenna radiation pattern synthesis can help to improve the cell planning. After an initial cell planning and testing, some coverage holes in the coverage area may be discovered. The coverage holes can be covered up by tweaking the radiation patterns through antenna radiation pattern synthesis.

A fifth application is cell splitting. The cell control can be used for the purpose of dynamic cell splitting. Dynamic cell splitting is done through antenna radiation pattern synthesis. For example, if the cell needs to be split into two virtual smaller cells, one could synthesize a radiation pattern that has two distinctive beams (split pattern) that their aggregated beam pattern covers the original coverage area. Each beam covers a sub-region of the original coverage area. The resource assigned for these two sub-regions could be the same or different. Splitting cells via split radiation beams is a technique used to improve frequency reuse within cell and among cells. For example, if a 120° cell is split into two 60° cells, the same spectrum can be used twice within the cell, one for terminals in one beam, and the other for terminals in the other beam. The cell splitting is dynamic and in real time, varying with time and traffic condition.

A sixth application is diversity. The antenna radiation pattern synthesis can be used for the purpose of diversity. For example, a BTS synthesizes two radiation patterns that are different in spatial characteristics (like different DOA) and send and receive the same messages via both the radiation patterns. In a case of fading channel, one copy of the message may be faded out. But chances that the two copies of the messages are faded out at the same time are small, so a terminal has a better chance to detect one good copy of the message.

A seventh application is antenna reuse and carrier overlay. With the antenna radiation pattern synthesis, it is possible to use the same set of antennas for multiple coverage areas. For example, an initial 120° coverage area is running out its capacity, and the wireless network needs to overlay the initial cell with another carrier. One way to do this is to synthesize a 60° antenna radiation pattern for the initial carrier and a 60° radiation pattern for the new carrier. These two 60° radiation patterns have their bore sights separated by 60° and cover the original 120° coverage area. Benefits of antenna radiation pattern synthesis in this case include that the same antennas are reused, and since the two carriers are not overlapped in space, there will be less hand off between these two carriers, resulting in better overall performance.

The above illustration provides many different embodiments or embodiments for implementing different features of the invention. Specific embodiments of components and processes are described to help clarify the invention. These are, of course, merely embodiments and are not intended to limit the invention from that described in the claims.

Although the invention is illustrated and described herein as embodied in one or more specific examples, it is nevertheless not intended to be limited to the details shown, since various modifications and structural changes may be made therein without departing from the invention and within the scope of the claims. Accordingly, it is appropriate that the appended claims be construed broadly and in a manner consistent with the scope of the invention, as set forth in the following claims.

## Claims

1. A method for cell control in a wireless network, the method comprising:
providing a first base transceiver station, BTS, with a first plurality of antennas receiving a first plurality of feed signals and a second plurality of feed signals; and
varying a first plurality of parameters of the first plurality of feed signals according to a first plurality of predetermined criteria for synthesizing a first antenna radiation pattern, wherein a first coverage area of the first BTS covered by the first antenna radiation pattern is adjusted; **characterized in that** the method further comprises:
varying a second plurality of parameters of the second plurality of feed signals according to a second plurality of predetermined criteria for synthesizing a second antenna radiation pattern, wherein a second coverage area of the first BTS covered by the second antenna radiation pattern is adjusted;
wherein the first and second coverage areas overlap each other, and wherein a message is transmitted to a terminal via both the first and second radiation patterns.

2. The method of claim 1, wherein the first plurality of parameters includes magnitudes and phases of the first plurality of feed signals; and the second plurality of parameters includes magnitudes and phases of the second plurality of feed signals.

3. The method of claim 2 further comprising setting the first plurality of feed signals to the same predetermined magnitude.

4. The method of claim 1 further comprising setting a gain ripple of the first antenna radiation pattern to be less than a predetermined threshold.

5. The method of claim 1, wherein varying the first plurality of parameters occurs while the first plurality of feed signals are in a baseband.

6. The method of claim 1, wherein varying the first plurality of parameters occurs while the first plurality of feed signals are in radio frequencies.

7. The method of claim 1, wherein varying the first plurality of parameters occurs while a first group of the first plurality of feed signals are in a baseband and a second group of the first plurality of feed signals are in radio frequencies.

8. The method of claim 1 further comprising:
monitoring a traffic load in the first coverage area; and
varying the parameters of the first plurality of feed signals based on the traffic load,
wherein the coverage area of the first antenna radiation pattern shrinks when the traffic is overloaded, and the coverage area of the first antenna radiation pattern expands when the traffic is under-loaded.

9. The method of claim 1, further comprising varying a transmitter power of the first BTS.

10. The method of claim 9 further comprising diminishing the first plurality of feed signals through the varying the first plurality of parameters and the varying transmitter power, wherein a cell covered by the first BTS is wilted out.

11. The method of claim 9 further comprising blossoming the first plurality of feed signals through the varying the first plurality of parameters and the varying transmitter power, wherein a new cell is added.

12. The method of claim 1 further comprising:
detecting one or more coverage holes in the first coverage area; and
specifying the first plurality of predetermined criteria,
wherein the coverage holes are covered after varying the one or more parameters of the first plurality of feed signals according to the first plurality of predetermined criteria.

13. The method of claim 1, wherein the first antenna radiation pattern includes two or more sub-regions formed by two or more radiation patterns, respectively, which are synthesized by the first plurality of feed signals.

14. The method of claim 1 further comprising:
providing a second BTS with a second plurality of antennas receiving a second plurality of feed signals, respectively; and
varying a second plurality of parameters of the second plurality of feed signals according to a second plurality of predetermined criteria for synthesizing a second antenna radiation pattern,
wherein coverage areas of the first and second antenna radiation patterns are adjusted to substantially next to each other.

15. A wireless communication system comprising:
means for providing a first base transceiver station. BTS, with a first plurality of antennas receiving a first plurality of feed signals and a second plurality of feed signals; and
means for varying a first plurality of parameters of the first plurality of feed signals according to a first plurality of predetermined criteria for synthesizing a first antenna radiation pattern, wherein a first coverage area of the first BTS covered by the first antenna radiation pattern is adjusted; **characterized in that** the system further comprises:
means for varying a second plurality of parameters of the second plurality of feed signals according to a second plurality of predetermined criteria for synthesizing a second antenna radiation pattern, wherein a second coverage area of the first BTS covered by the second antenna radiation pattern is adjusted;
wherein the first and second coverage areas overlap each other, and wherein a message is transmitted to a terminal via both the first and second radiation patterns.

## Patentansprüche

1. Verfahren zur Zellensteuerung in einem drahtlosen Netzwerk, wobei das Verfahren Folgendes beinhaltet:
Bereitstellen einer ersten Sende/Empfangs-Basisstation BTS mit einer ersten Mehrzahl von Antennen, die eine erste Mehrzahl von Feed-Signalen und eine zweite Mehrzahl von Feed-Signalen empfangen; und
Variieren einer ersten Mehrzahl von Parametern der ersten Mehrzahl von Feed-Signalen gemäß einer ersten Mehrzahl von vorbestimmten Kriterien zum Synthetisieren eines ersten Antennendiagramms, wobei ein erster Versorgungsbereich der vom ersten Antennendiagramm versorgten ersten BTS justiert wird; **dadurch gekennzeichnet, dass** das Verfahren ferner Folgendes beinhaltet:
Variieren einer zweiten Mehrzahl von Parametern der zweiten Mehrzahl von Feed-Signalen gemäß einer zweiten Mehrzahl von vorbestimmten Kriterien zum Synthetisieren eines zweiten Antennendiagramms, wobei ein zweiter Versorgungsbereich der vom zweiten Antennendiagramm versorgten ersten BTS justiert wird;
wobei sich der erste und der zweite Versorgungsbereich überlappen und wobei eine Nachricht zu einem Endgerät über das erste und das zweite Antennendiagramm gesendet wird.

2. Verfahren nach Anspruch 1, wobei die erste Mehrzahl von Parametern Größen und Phasen der ersten Mehrzahl von Feed-Signalen beinhaltet; und die zweite Mehrzahl von Parametern Größen und Phasen der zweiten Mehrzahl von Feed-Signalen beinhaltet.

3. Verfahren nach Anspruch 2, das ferner das Setzen der ersten Mehrzahl von Feed-Signalen auf dieselbe vorbestimmte Größe beinhaltet.

4. Verfahren nach Anspruch 1, das ferner das Setzen einer Verstärkungswelligkeit des ersten Antennendiagramms beinhaltet, so dass sie geringer ist als ein vorbestimmter Schwellenwert.

5. Verfahren nach Anspruch 1, wobei das Variieren der ersten Mehrzahl von Parametern erfolgt, während die erste Mehrzahl von Feed-Signalen in einem Basisband ist.

6. Verfahren nach Anspruch 1, wobei das Variieren der ersten Mehrzahl von Parametern erfolgt, während die erste Mehrzahl von Feed-Signalen in Funkfrequenzen ist.

7. Verfahren nach Anspruch 1, wobei das Variieren der ersten Mehrzahl von Parametern erfolgt, während eine erste Gruppe der ersten Mehrzahl von Feed-Signalen in einem Basisband ist und eine zweite Gruppe der ersten Mehrzahl von Feed-Signalen in Funkfrequenzen ist.

8. Verfahren nach Anspruch 1, das ferner Folgendes beinhaltet:
Überwachen einer Verkehrslast im ersten Versorgungsbereich; und
Variieren der Parameter der ersten Mehrzahl von Feed-Signalen auf der Basis der Verkehrslast,
wobei der Versorgungsbereich des ersten Antennendiagramms bei Verkehrsüberlastung schrumpft und der Versorgungsbereich des ersten Antennendiagramms bei unausgelastetem Verkehr expandiert.

9. Verfahren nach Anspruch 1, das ferner das Variieren einer Senderleistung der ersten BTS beinhaltet.

10. Verfahren nach Anspruch 9, das ferner das Verringern der ersten Mehrzahl von Feed-Signalen durch Variieren der ersten Mehrzahl von Parametern und Variieren der Senderleistung beinhaltet, wobei eine von der ersten BTS versorgte Zelle verwelken gelassen wird.

11. Verfahren nach Anspruch 9, das ferner das Blühenlassen der ersten Mehrzahl von Feed-Signalen durch Variieren der ersten Mehrzahl von Parametern und Variieren der Senderleistung beinhaltet, wenn eine neue Zelle hinzugefügt wird.

12. Verfahren nach Anspruch 1, das ferner Folgendes beinhaltet:
Erkennen von einem oder mehreren Versorgungslöchern im ersten Versorgungsbereich; und
Vorgeben der ersten Mehrzahl von vorbestimmten Kriterien,
wobei die Versorgungslöcher nach dem Variieren der ein oder mehreren Parameter der ersten Mehrzahl von Feed-Signalen gemäß der ersten Mehrzahl von vorbestimmten Kriterien gefüllt werden.

13. Verfahren nach Anspruch 1, wobei das erste Antennendiagramm zwei oder mehr Subregionen aufweist, die jeweils von zwei oder mehr Antennendiagrammen gebildet werden, die durch die erste Mehrzahl von Feed-Signalen synthetisiert werden.

14. Verfahren nach Anspruch 1, das ferner Folgendes beinhaltet:
Bereitstellen einer zweiten BTS mit einer zweiten Mehrzahl von Antennen, die jeweils eine zweite Mehrzahl von Feed-Signalen empfangen; und
Variieren einer zweiten Mehrzahl von Parametern der zweiten Mehrzahl von Feed-Signalen gemäß einer zweiten Mehrzahl von vorbestimmten Kriterien zum Synthetisieren eines zweiten Antennendiagramms,
wobei Versorgungsbereiche des ersten und zweiten Antennendiagramms so justiert werden, dass sie im Wesentlichen nebeneinander liegen.

15. Drahtloses Kommunikationssystem, das Folgendes umfasst:
Mittel zum Bereitstellen einer ersten Sende/Empfangs-Basisstation BTS mit einer ersten Mehrzahl von Antennen, die eine erste Mehrzahl von Feed-Signalen und eine zweite Mehrzahl von Feed-Signalen empfangen; und
Mittel zum Variieren einer ersten Mehrzahl von Parametern der ersten Mehrzahl von Feed-Signalen gemäß einer ersten Mehrzahl von vorbestimmten Kriterien zum Synthetisieren eines ersten Antennendiagramms, wobei ein erster Versorgungsbereich der ersten vom ersten Antennendiagramm versorgten BTS justiert wird; **dadurch gekennzeichnet, dass** das System ferner Folgendes umfasst:
Mittel zum Variieren einer zweiten Mehrzahl von Parametern der zweiten Mehrzahl von Feed-Signalen gemäß einer zweiten Mehrzahl von vorbestimmten Kriterien zum Synthetisieren eines zweiten Antennendiagramms, wobei ein zweiter Versorgungsbereich der vom zweiten Antennendiagramm versorgten ersten BTS justiert wird;
wobei sich der erste und der zweite Versorgungsbereich überlappen und wobei eine Nachricht zu einem Endgerät sowohl über das erste als auch über das zweite Antennendiagramm gesendet wird.

## Revendications

1. Procédé de contrôle de cellule dans un réseau sans fil, le procédé comportant :
l'étape consistant à mettre en oeuvre une première station d'émission-réception de base, BTS, avec une première pluralité d'antennes recevant une première pluralité de signaux d'alimentation et une seconde pluralité de signaux d'alimentation ; et
l'étape consistant à faire varier une première pluralité de paramètres de la première pluralité de signaux d'alimentation en fonction d'une première pluralité de critères prédéterminés à des fins de synthèse d'un premier diagramme de rayonnement d'antenne, dans lequel une première zone de couverture de la première BTS couverte par le premier diagramme de rayonnement d'antenne est ajustée ; **caractérisé en ce que** le procédé comporte par ailleurs :
l'étape consistant à faire varier une seconde pluralité de paramètres de la seconde pluralité de signaux d'alimentation en fonction d'une seconde pluralité de critères prédéterminés à des fins de synthèse d'un second diagramme de rayonnement d'antenne, dans lequel une seconde zone de couverture de la première BTS couverte par le second diagramme de rayonnement d'antenne est ajustée ;
dans lequel les première et seconde zones de couverture se chevauchent l'une l'autre, et dans lequel un message est transmis à un terminal par le biais à la fois des premier et second diagrammes de rayonnement.

2. Procédé selon la revendication 1, dans lequel la première pluralité de paramètres comprend les amplitudes et les phases de la première pluralité de signaux d'alimentation ; et la seconde pluralité de paramètres comprend les amplitudes et les phases de la seconde pluralité de signaux d'alimentation.

3. Procédé selon la revendication 2, comportant par ailleurs l'étape consistant à régler la première pluralité de signaux d'alimentation selon la même amplitude prédéterminée.

4. Procédé selon la revendication 1, comportant par ailleurs l'étape consistant à régler une ondulation de gain du premier diagramme de rayonnement d'antenne pour qu'elle soit inférieure à un seuil prédéterminé.

5. Procédé selon la revendication 1, dans lequel l'étape consistant à faire varier la première pluralité de paramètres a lieu quand les signaux d'alimentation de la première pluralité de signaux d'alimentation se trouvent dans une bande de base.

6. Procédé selon la revendication 1, dans lequel l'étape consistant à faire varier la première pluralité de paramètres a lieu quand les signaux d'alimentation de la première pluralité de signaux d'alimentation se trouvent dans des radiofréquences.

7. Procédé selon la revendication 1, dans lequel l'étape consistant à faire varier la première pluralité de paramètres a lieu quand les signaux d'alimentation d'un premier groupe de la première pluralité de signaux d'alimentation se trouvent dans une bande de base et quand les signaux d'alimentation d'un second groupe de la première pluralité de signaux d'alimentation se trouvent dans des radiofréquences.

8. Procédé selon la revendication 1, comportant par ailleurs :
l'étape consistant à contrôler un volume de trafic dans la première zone de couverture ; et
l'étape consistant à faire varier les paramètres de la première pluralité de signaux d'alimentation en fonction du volume de trafic,
dans lequel la zone de couverture du premier diagramme de rayonnement d'antenne se rétrécit quand le trafic est surchargé, et la zone de couverture du premier diagramme de rayonnement d'antenne s'agrandit quand le trafic est réduit.

9. Procédé selon la revendication 1, comportant par ailleurs l'étape consistant à faire varier une puissance d'émetteur de la première BTS.

10. Procédé selon la revendication 9, comportant par ailleurs l'étape consistant à faire diminuer la première pluralité de signaux d'alimentation en faisant varier la première pluralité de paramètres et en faisant varier la puissance d'émetteur, dans lequel une cellule couverte par la première BTS est progressivement éradiquée.

11. Procédé selon la revendication 9, comportant par ailleurs l'étape consistant à faire s'épanouir la première pluralité de signaux d'alimentation en faisant varier la première pluralité de paramètres et en faisant varier la puissance d'émetteur, dans lequel une nouvelle cellule est ajoutée.

12. Procédé selon la revendication 1, comportant par ailleurs :
l'étape consistant à détecter un ou plusieurs trous de couverture dans la première zone de couverture ; et
l'étape consistant à spécifier la première pluralité de critères prédéterminés,
dans lequel les trous de couverture sont couverts après avoir fait varier lesdits un ou plusieurs paramètres de la première pluralité de signaux d'alimentation en fonction de la première pluralité de critères prédéterminés.

13. Procédé selon la revendication 1, dans lequel le premier diagramme de rayonnement d'antenne comprend deux ou plusieurs sous-régions formées par deux ou plusieurs diagrammes de rayonnement d'antenne, respectivement, qui sont synthétisés par la première pluralité de signaux d'alimentation.

14. Procédé selon la revendication 1, comportant par ailleurs :
l'étape consistant à mettre en oeuvre une seconde BTS avec une seconde pluralité d'antennes recevant une seconde pluralité de signaux d'alimentation, respectivement ; et
l'étape consistant à faire varier une seconde pluralité de paramètres de la seconde pluralité de signaux d'alimentation en fonction d'une seconde pluralité de critères prédéterminés à des fins de synthèse d'un second diagramme de rayonnement d'antenne,
dans lequel les zones de couverture des premier et second diagrammes de rayonnement d'antenne sont ajustés sensiblement l'un à côté de l'autre.

15. Système de communication sans fil comportant :
un moyen permettant de mettre en oeuvre une première station d'émission-réception de base, BTS, avec une première pluralité d'antennes recevant une première pluralité de signaux d'alimentation et une seconde pluralité de signaux d'alimentation ; et
un moyen permettant de faire varier une première pluralité de paramètres de la première pluralité de signaux d'alimentation en fonction d'une première pluralité de critères prédéterminés à des fins de synthèse d'un premier diagramme de rayonnement d'antenne, dans lequel une première zone de couverture de la première BTS couverte par le premier diagramme de rayonnement d'antenne est ajustée ; **caractérisé en ce que** le système comporte par ailleurs :
un moyen permettant de faire varier une seconde pluralité de paramètres de la seconde pluralité de signaux d'alimentation en fonction d'une seconde pluralité de critères prédéterminés à des fins de synthèse d'un second diagramme de rayonnement d'antenne, dans lequel une seconde zone de couverture de la première BTS couverte par le second diagramme de rayonnement d'antenne est ajustée ;
dans lequel les première et seconde zones de couverture se chevauchent l'une l'autre, et dans lequel un message est transmis à un terminal par le biais à la fois des premier et second diagrammes de rayonnement.
